# EUROPÄISCHE PATENTSCHRIFT

(11) **EP 0 667 078 B1**
(45) Veröffentlichungstag und Bekanntmachung des Hinweises auf die Patenterteilung: **04.06.1997**
(21) Anmeldenummer: 93922493.7
(22) Anmeldetag: 13.10.1993
(51) Int. Cl.: H04M 1/72, H04B 7/26

(54) **VERFAHREN ZUM ZUSAMMENSCHLUSS VON SENDE-/EMPFANGSEINRICHTUNGEN EINES SCHNURLOS-KOMMUNIKATIONSSYSTEMS ZU EINER KOMMUNIKATIONSFÄHIGEN EINHEIT**
PROCESS FOR COMBINING TRANSMITTER-RECEIVER PAIRS OF A CORDLESS COMMUNICATIONS SYSTEM TO FORM A COMMUNICATING UNIT
PROCEDE D'INTERCONNECTION D'APPAREILS EMETTEURS/RECEPTEURS D'UN SYSTEME DE COMMUNICATION SANS FIL POUR CONSTITUER UNE UNITE DE COMMUNICATION

(30) Priorität: 30.10.1992 DE 4236778
(43) Veröffentlichungstag der Anmeldung: 16.08.1995
(73) Patentinhaber: SIEMENS AKTIENGESELLSCHAFT, 80333 München (DE)
(72) Erfinder: RÜTHER, Ralf, D-48653 Coesfeld (DE); BARTSCH, Ulrich, D-46224 Bottrop (DE); BAUMEISTER, Josef, D-46325 Borken (DE)
(86) Internationale Anmeldenummer: DE9300978
(87) Internationale Veröffentlichungsnummer: WO9410785

(56) Entgegenhaltungen:
- EP-A- 0 301 573
- US-A- 5 212 809
- NACHRICHTENTECHNIK, ELEKTRONIK Bd. 42, Nr. 1 , Januar 1992 , BERLIN DE Seiten 23 - 29 XP000279214 U.PILGER 'Struktur des DECT-Standards'

## Beschreibung

Die Erfindung bezieht sich auf ein Verfahren zum Zusammenschluß von Sende-/Empfangseinrichtungen eines Schnurlos-Kommunikationssystems zu einer kommunikationsfähigen Einheit gemäß dem Oberbegriff des Patentanspruches 1.

Kommunikationssysteme für die schnurlose Übertragung von Sprach- und Nichtsprachinformationen sind in ihrer technischen Entwicklung, analog zu dem in der leitungsgebundenen Kommunikationstechnik bereits seit längerem bestehenden ISDN-Standard (Integrated Services Digital Network), an verschiedenen Standards gebunden. Neben einigen nationalen Standards und mehreren länderübergreifenden Standards, wie den CT1, CT1+ Standard auf analoger Basis und den CT2, CT3 Standard auf digitaler Basis, ist auf europäischer Ebene, analog zu dem globalen GSM-Standard (Groupe Spéciale Mobile oder Global Systems for Mobile Communication; vgl. Informatik Spektrum, Springer Verlag Berlin, Jg. 14, No. 3, 1991, Seiten 137 bis 152, A. Mann: "Der GSM-Standard - Grundlage für digitale europäische Mobilfunknetze") für den Mobilfunk, für die leistungsschwächere Schnurlos-Kommunikation zwischen mobilen Geräten (Portables) und einer ortsfesten Station (Basis) bei Reichweiten von einigen hundert Metern ein Standard, der sogenannte DECT-Standard (Digital European Cordless Telecommunication; vgl. Nachrichtentechnik Elektronik, Berlin, Jg. 42, No. 1, 1-2/1992, Seiten 23 bis 29, U. Pilger: "Struktur des DECT-Standards") geschaffen worden. Ein wesentliches Leistungsmerkmal des DECT-Standard ist es, daß die ortsfeste Station an leitungsgebundene Kommunikationsnetze (z.B. PSTN = Public Switched Telephone Network; PTN = Private Telecommunication Network) anschließbar ist.

Für die schnurlose Kommunikation nach dem DECT-Standard wird eine dynamische Kanalauswahl von ca. 120 verfügbaren Kanälen durchgeführt.

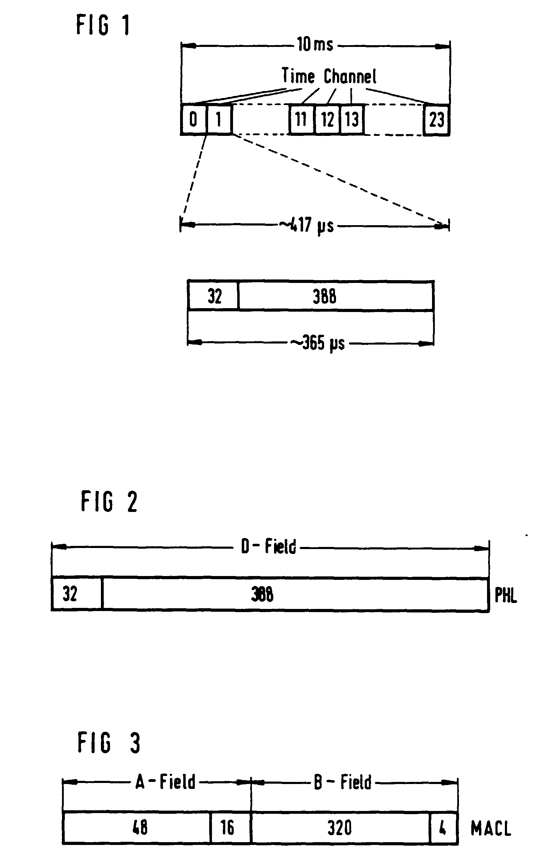

Die 120 Kanäle ergeben sich daraus, daß bei dem DECT-Standard zehn Frequenzbänder zwischen 1,8 und 1,9 GHz verwendet werden, wobei in jedem Frequenzband gemäß der Darstellung in Figur 1 im Zeitmultiplex (TDMA = Time Division Multiple Access) mit einem Zeitmultiplexrahmen von 10 ms gearbeitet wird. In diesem Zeitmultiplexrahmen werden 24 (von 0 bis 23) Zeitkanäle definiert und dadurch ein Rahmenschema vorgegeben. Dieses Rahmenschema wird dann derart benutzt, daß für jedes Frequenzband 12 Stationen eines DECT-Systems gleichzeitig im Duplexbetrieb arbeiten können. Den 24 Zeitkanälen wird dabei ein Zeitschlitz (Time Slot) von jeweils 417 µs zugeordnet. Dieser Zeitschlitz gibt dabei die Zeit an, in der Informationen (Daten) übertragen werden. Dieses Übertragen der Informationen im Duplexbetrieb wird auch als Ping-Pong-Verfahren bezeichnet, weil zu einem bestimmten Zeitpunkt gesendet und zu einem anderen Zeitpunkt empfangen wird. Bei diesem Ping-Pong-Verfahren wird in jedem Zeitschlitz ein Zeitrahmen oder Impuls (Burst) von 365 µs, was in etwa einer Rahmenlänge von 420 Bits entspricht, übertragen. Die zeitliche Aufeinanderfolge der übertragenen Impulse definiert einen Kanal, den sogenannten Physical Channel, mit einem Datendurchsatz von 42 kbit/s für den Zeitschlitz, 6 kbit/s für einen zur Vermeidung von Überlappungen durch angrenzende Zeitschlitze verwendeten Sicherheitszeitrahmen (Guard Space) und 1,152 Mbit/s für den Zeitmultiplexrahmen. Der in Figur 2 dargestellte Zeitrahmen wird im DECT-Standard einer physikalischen Schicht, dem sogenannten PHysical Layer (PH-L), zugeordnet und häufig auch als D-Feld bezeichnet.

Darüber hinaus sind in dem DECT-Standard analog zum ISDN-Standard mit dem ISO/OSI 7-Schichtenmodell mehrere Schichten (Layer) definiert. Eine dieser Schichten ist der PHysical Layer (PH-L). Eine weitere Schicht ist ein Medium Access Control Layer (MAC-L), dem gemäß Figur 3 ein A-Feld und ein B-Feld zugeordnet sind. Das A-Feld umfaßt dabei 64 Bit, die u.a. für Meldungen (Messages) beim Zusammenschluß der mobilen Geräte und ortsfesten Station des DECT-Kommunikationssystems genutzt werden. Das B-Feld umfaßt 324 Bit, von denen 320 Bit für Sprachdaten und 4 Bit zur Erkennung von Teilinterferenzen des Impulses genutzt werden.

Das DECT-Kommunikationssystem weist in der einfachsten Form eine Basisstation mit mindestens einer Mobilstation auf. Komplexere (z.B. vernetzte) Systeme enthalten mehrere Basisstationen mit jeweils mehreren Mobilstationen. Aufgrund der 24 im DECT-Standard definierten Zeitkanäle können der Basisstation bis zu 12 Mobilstationen zugeordnet werden, die mit der Basisstation im Duplexbetrieb kommunizieren. Für den im DECT-Standard ebenfalls definierten Zeitmultiplexrahmen von 10 ms bedeutet der Duplexbetrieb, daß alle 5 ms Informationen von der Basisstation zu einer Mobilstation oder umgekehrt übertragen werden. Damit die Basis- und Mobilstation miteinander kommunizieren können, muß zunächst sichergestellt werden, daß die beiden Stationen (Kommunikationsteilnehmer) zu einer kommunikationsfähigen Einheit zusammengeschlossen sind.

Für diesen Zusammenschluß wird gemäß der EP-A2-0 301 573 eine Anmeldungs- und Registrierungsprozedur durchgeführt. Der Zusammenschluß zwischen einer Basisstation und einem Mobilteil wird bei dieser bekannten Anmelde- und Registrierungsprozedur wie folgt erreicht:
(1) Übertragen eines produktspezifischen Kennwortes von der Basisstation zum anmeldebereiten Mobilteil,
(2) Überprüfen des empfangenen Kennwortes in dem Mobilteil (Feststellen der Übereinstimmung zu einem in dem Mobilteil gespeicherten Kennwort und anschließendem Bestätigen der festgestellten Übereinstimmung),
(3) Übertragen eines systems- und telefonspezifischen Identifikationskennwortes von der Basisstation,
(4) Speichern des Identifikationskennwortes in einen Speicher des Mobilteils.

Trotz dieser bekannten Vorgehensweise beim Zusammenschluß von Basis- und Mobilstationen zu einer kommunikationsfähigen Einheit ist es immer noch möglich, daß fremde Benutzer eines Schnurlos-Kommunikationssystems mit Hilfe von produktgleichen (gleiches produktspezifisches Kennwort) Mobilstationen über die Basisstation des Schnurlos-Kommunikationssystems, wenn diese z. B. an ein leitungsgebundenes Kommunikationsnetz angeschlossen ist, unberechtigterweise Telefongespräche führen können.

Aufgabe der Erfindung ist es, ein Verfahren zum Zusammenschluß von Sende-/Empfangseinrichtungen eines Schnurlos-Kommunikationssystems zu einer kommunikationsfähigen Einheit anzugeben, mit dem die bekannten Nachteile vermieden werden.

Diese Aufgabe wird ausgehend von dem im Oberbegriff des Patentanspruches 1 definierten Verfahren durch die in dem kennzeichnenden Teil des Patentanspruches 1 angegebenen Merkmale gelöst.

Vorteilhafte Weiterbildungen der Erfindung sind in den Unteransprüchen angegeben.

Ein Ausführungsbeispiel der Erfindung wird anhand der Zeichnungen mit den Figuren 4 bis 12 erläutert. Es zeigen:
Figur 4 ein prinzipielles Ablaufdiagramm einer Basis- und Mobilstation für den Zusammenschluß derselben zu einer kommunikationsfähigen Einheit,
Figur 5 bis 7 jeweils verschiedene Speicherzustände der Basisstation während des Zusammenschlusses mit einer einzigen Mobilstation,
Figur 8 bis 10 jeweils verschiedene Speicherzustände der Mobilstation während des Zusammenschlusses mit der Basisstation nach Figur 5 bis 7,
Figur 11 den Speicherzustand der Basisstation nach dem Zusammenschluß mit mehreren Mobilstationen,
Figur 12 eine einfache Vergleichsanordnung zur Durchführung eines Soll-/Ist-Vergleiches während des Zusammenschlusses der Basis- und Mobilstation.

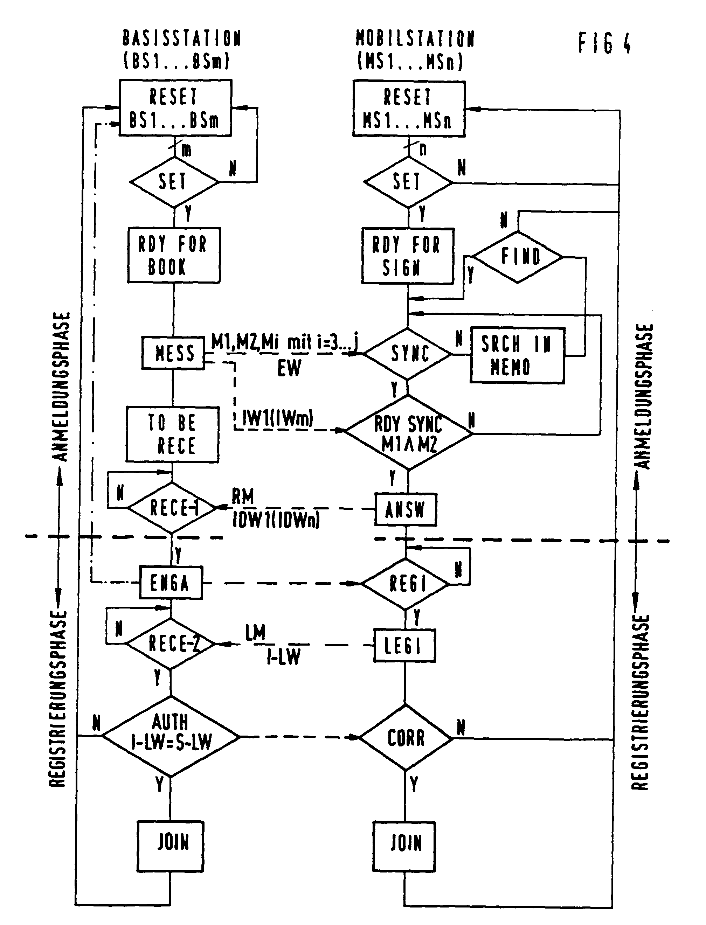

Figur 4 zeigt ein Ablaufdiagramm von Basisstationen BS1...BSm und Mobilstationen MS1...MSn eines Schnurlos-Kommunikationssystems für den Zusammenschluß derselbigen zu einer kommunikationsfähigen Einheit. Die Basisstationen BS1...BSm und Mobilstationen MS1...MSn sind dabei Sende-/Empfangseinrichtungen, die sowohl Senden als auch Empfangen können.

Für den Zusammenschluß der Sende-/Empfangseinrichtungen wird zunächst in einer Anmeldungsphase davon ausgegangen, daß sich die Basisstation BS1...BSm und die Mobilstation MS1...MSn noch in einem AUS-Zustand befinden. Dieser AUS-Zustand ist ein Subzustand eines AUSGANGS-Zustandes ("RESET BS1...BSm"), ("RESET MS1...MSn"), dem außerdem noch ein KOMMUNIKATIONS-Zustand und ÜBERGANGS-Zustand (Übergang von einer beendeten zu einer neuen Zusammenschlußprozedur) zugeordnet ist.

Um von dem AUSGANGS-Zustand in einen START-Zustand ("SET") zu gelangen, werden an der Basisstation BS1..BSm und der Mobilstation MS1...MSn zeitlich unabhängig voneinander Tasten bedient. Bei der Mobilstation MS1...MSn ist dies üblicherweise eine Tastenkombination, während es bei der Basisstation BS1...BSn, wenn sie (a) auch als Sprechapparat oder (b) als Schnittstelle zu einem externen Kommunikationsnetz ausgeführt ist, ebenfalls eine Tastenkombination bzw. eine Sondertaste sein kann. Da dem Kommunikationssystem m Basisstationen und n Mobilstationen zugeordnet sein können, kann es folglich auch m bzw. n zeitgleiche oder -ungleiche Einschaltvorgänge geben. In Figur 4 ist dies durch einen "/"-Strich in dem "RESET/SET"-Übergang zum Ausdruck gebracht.

Im folgenden soll von den m x n Kombinationen für den Zusammenschluß der Basisstationen BS1...BSm und Mobilstationen MS1...MSn stellvertretend für alle anderen der Zusammenschluß der Basisstation BS1 und der Mobilstation MS1 (Kombination "BS1 x MS1") beschrieben werden.

Nach dem Einschalten der Basisstation BS1 (Zustand "SET") wird diese z. B. durch Betätigen der Sondertaste in einen ANMELDEBEREIT-Zustand ("RDY FOR BOOK") und einen MELDUNG-Zustand ("MESS") überführt. In diesem MELDUNG-Zustand sendet die Basisstation BS1 automatisch in jedem k-ten Zeitmultiplexrahmen von 10 ms für eine Zeitdauer von z. B. kleiner als 30 Sekunden mindestens eine Meldung, mit der sie ihre Anmeldebereitschaft der Mobilstation MS1 mitteilt. Im vorliegenden Ausführungsbeispiel werden von der Basisstation BS1 z. B. zwei Meldungen, eine DECT-spezifische Meldung M1 und eine Ergänzungsmeldung mit einem Ergänzungswort EW, gesendet.

Bei der DECT-spezifischen Meldung M1 handelt es sich dabei um eine Meldung, die im A-Feld der MAC-Schicht (Medium Access Control-Layer) in einem dort definierten Q-Kanal übertragen wird. In diesem Q-Kanal werden in einem 16 Bit Informationsfeld für oberhalb der PH-Schicht (PHysical-Layer) und der MAC-Schicht (Medium Access Control-Layer) des DECT-Standards (DECT-Übertragungsvereinbarung) definierte Schichten (Higher Layer Information) Standardeigenschaften (Attribute) der Basisstation BS1 übertragen. Die von der Basisstation BS1 gesendete DECT-spezifische Meldung ist eine solche Standardeigenschaft. Die Meldung wird immer dann gesendet, wenn an der 13. Bitstelle des Informationsfeldes eine logische "1" gesetzt ist.

Bei der Ergänzungsmeldung M2 kann es sich beispielsweise um eine benutzerspezifische Meldung handeln, die, wie im vorliegenden Ausführungsbeispiel, zur Kennzeichnung einer der Basisstation BS1 zugeordneten Gerätefamilie dienen kann. Da es sich bei diesem Ausführungsbeispiel um ein DECT-spezifisches Kommunikationssystem handelt, muß für das Senden der Ergänzungsmeldung M2 innerhalb des im DECT-Standard definierten Zeitrahmens auch der dafür notwendige Übertragungsrahmen zur Verfügung stehen.

Im DECT-Standard besteht im A-Feld der MAC-Schicht (Medium Access Control-Layer) die Möglichkeit, in einem dort definierten Q-Kanal verschiedene Systeminformationen zu übertragen. In dieser Palette von übertragbaren Systeminformationen gibt es wiederum eine Übertragungssequenz (ESCAPE-Sequenz), der kein DECT-spezifischer Informationsinhalt zugeordnet ist und die deshalb zur freien Verfügung steht. Diese ESCAPE-Sequenz, die durch eine Einleitungssequenz (HEADER) von 4 Bit mit der Bitkombination "0111" eingeleitet wird, umfaßt insgesamt 36 frei verfügbare Bits, die für das Erganzungswort zur Verfügung stehen. Die Ergänzungsmeldung M2 und die DECT-spezifische Meldung M1 werden gemäß der DECT-Übertragungsvereinbarung zusammen mit einer weiteren DECT-Meldung alternierend in jedem 8-ten von 16 (k=16) Zeitmuliplexrahmen gesendet.

Um die zwei, von der Basisstation BS1 im MELDUNG-Zustand ("MESS") gesendeten Meldungen M1, M2 empfangen zu können, muß sich die Mobilstation MS1 in einem MELDEBEREIT-Zustand ("RDY FOR SIGN") befinden. Durch die vorstehend erwähnte Tastenkombination wird die Mobilstation MS1 vom SET-Zustand in den MELDEBEREIT-Zustand überführt.

Befindet sich die Mobilstation MS1 in diesem Zustand und werden während dessen die zwei Meldungen M1, M2 von der Basisstation BS1 gesendet, dann versucht die Mobilstation MS1 sich in einem SYNCHRONISATIONS-Zustand ("SYNC") auf diese beiden Meldungen M1, M2 zu synchronisieren. Je nach Art der von der Basisstation BS1 gesendeten Meldung ist eine Synchronisation seitens der Mobilstation MS1 nicht erforderlich. Im vorliegenden Ausführungsbeispiel trifft dies auf die DECT-spezifische Meldung M1 zu. Bei dieser Meldung handelt es sich um einen "einfach handhabbaren" Meldungstyp, bei dem jede x-beliebige Mobilstation automatisch eine Zugriffsberechtigung auf die Basisstation BS1 erhält. Dies ist aber, wie bereits in der Beschreibungseinleitung erwähnt, nicht erwünscht. Die Mobilstation MS1, die in einem ENDE DER SYNCHRONISATION-Zustand ("RDY SYNC; M1") versucht die Zugriffsberechtigung nur aufgrund der empfangenen DECT-spezifischen Meldung M1 zu bekommen, wird von der Basisstation BS1, weil diese sich noch nicht in einem EMPFANGSBEREITEN-Zustand ("TO BE RECE") befindet, abgewiesen. Der Mobilstation MS1 bleibt somit gar nichts anderes übrig, als sich auf die von der Basisstation BS1 ebenfalls gesendete Ergänzungsmeldung M2 zu synchronisieren.

Die Ergänzungsmeldung M2 ist dabei im Unterschied zur DECT-spezifischen Meldung M1 ein benutzerindividueller Meldungstyp, um die Zugriffsberechtigung für die Basisstation BS1 zu erschweren. Es sei an dieser Stelle nochmals darauf hingewiesen, daß es auch möglich ist, mehr als eine Ergänzungsmeldung M2 (z. B. Mi mit i = 3...j) zu senden, um die Zugriffsberechtigung noch weiter zu erschweren. Eine Grenze für solche Erweiterungen ist zumindest in bezug auf den DECT-Standard jedoch durch die 36 Bit der ESCAPE-Sequenz gesetzt.

Die Synchronisation der Mobilstation MS1 auf die Ergänzungsmeldung M2 erfolgt dadurch, daß die Mobilstation MS1 in einem SUCH-Zustand ("SRCH IN MEMO") in einem ihr zugeordneten Speicher (z. B. einem RAM oder ROM etc.) nach einer zu dieser Ergänzungsmeldung M2 korrespondierenden Synchronisationsinformation sucht. Bleibt diese Suche der Mobilstation MS1 in einem FINDEN-Zustand ("FIND") erfolglos, dann ist es für den Benutzer der Mobilstation MS1 nicht möglich, die Zugriffsberechtigung für die Basisstation BS1 zu erlangen. Er wird als Nichtberechtigter abgewiesen. Dies bedeutet, daß er die Mobilstation MS1 ruhig vorübergehend ausschalten ("RESET MS1... MSn") kann, um dann z. B. zeitversetzt zu versuchen, sich mit einer der anderen Basisstationen BS2...BSm zusammenzuschließen.

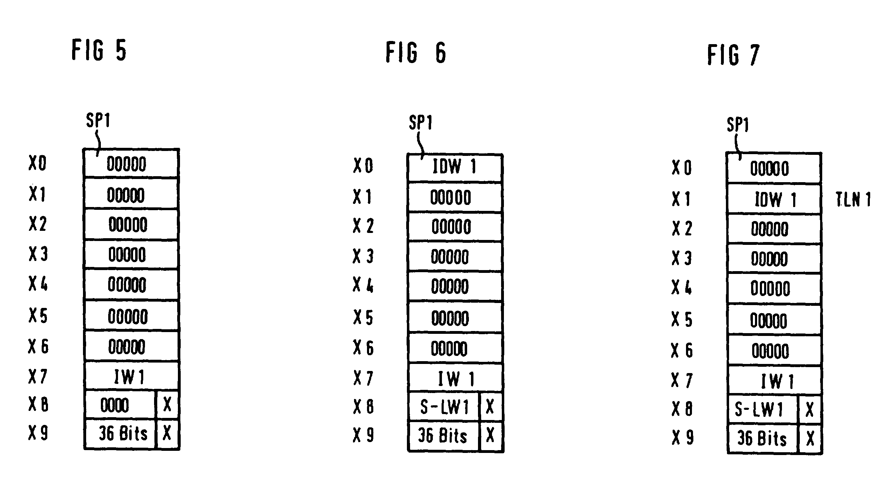

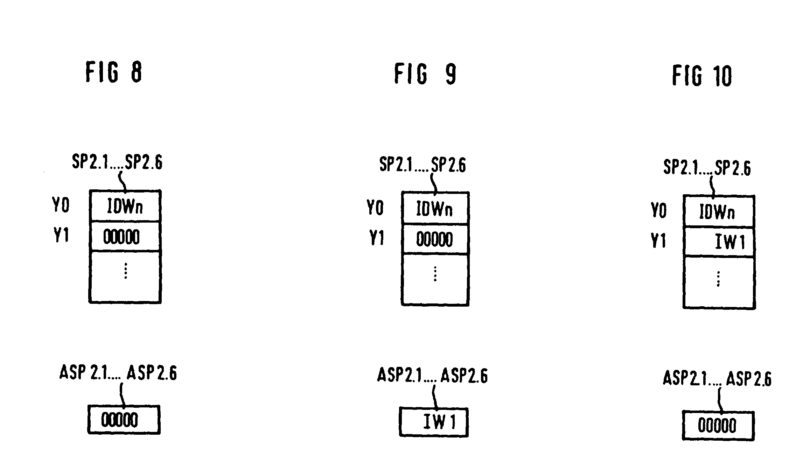

Ist diese Suche der Mobilstation MS1 in dem FINDEN-Zustand ("FIND") jedoch erfolgreich, dann ist die Synchronisation, für den Fall, daß keine weiteren Ergänzungsmeldungen Mi von der Basisstation BS1 gesendet worden sind, beendet ("RDY SYNC; M1 ∧ M2"). In diesem ("RDY SYNC; M1 ∧ M2")-Zustand erhält die Mobilstation MS1 beispielsweise von der Basisstation BS1 ein individuelles, bei der Herstellung der Basisstation BS1 für immer fest zugeordnetes, in einem programmierbaren BS1-Speicher (BS1-Speicherplatz X7 des BS1-Speichers SP1 nach Figuren 5 bis 7 und 11) der Basisstation unentschlüsselbar hinterlegtes BS1-Identifikationswort IW1 (IWm). Das erhaltene BS1-Identifikationswort IW1 (IWm) wird in der Mobilstation MS1 temporär in einem Arbeitsspeicher (MS1-Arbeitsspeicher ASP2.1 nach Figur 9) zwischengespeichert.

Die Mobilstation MS1 sendet daraufhin in einem ANTWORT-Zustand ("ANSW") automatisch eine Rückmeldung RM zur Basisstation BS1. Mit dieser Rückmeldung RM wird von der Mobilstation MS1 auch ein individuelles, bei der Herstellung der Mobilstation MS1 für immer fest zugeordnetes, in einem programmierbaren MS1-Speicher (MS1-Speicherplatz YO des MS1-Speichers SP2.1 nach Figuren 8 bis 10) der Mobilstation MS1 unentschlüsselbar hinterlegtes MS1-Identifikationswort IDW1 (IDWn) übertragen und in der Basisstation BS1 temporär in einem Zwischenspeicher (BS1-Speicherplatz XO des BS1-Speichers SP1 nach Figur 6) zwischengespeichert. Danach wechselt die Mobilstation MS1 automatisch in einen REGISTRIER-Zustand ("REGI"). Mit diesem Wechsel ist die Anmeldungsphase abgeschlossen und die Mobilstation MS1 signalisiert der Basisstation BS1, daß jetzt eine Registrierungsphase beginnen kann (Bereitschaftserklärung für die Registrierung).

Die Basisstation BS1, die sich bereits nach dem Senden der letzten Meldung in einen ersten EMPFANGS-Zustand ("RECE-1") befindet und auf diese Rückmeldung RM (Feedback von einer Mobilstation) wartet, bindet unmittelbar danach in einem BINDEN-Zustand ("ENGA") durch eine "Klammer" die sich in dem REGISTRIER-Zustand ("REGI") befindende Mobilstation MS1 für die Registrierungsphase an sich.

Mit der "Klammerung" der Mobilstation MS1 schaltet sich die Basisstation BS1 in bezug auf die Anmeldebereitschaft (Zustände "SET"; "RDY FOR BOOK"; "MESS") aus (strichpunktierter Pfeil in Figur 4 vom BINDEN-Zustand ("ENGA") in den AUSGANGS-Zustand ("RESET BS1...BSm")). Damit ist es den anderen Mobilstationen MS2...MSn für die Registrierungsphase, in der die Mobilstation MS1 mit der Basisstation BS1 zusammengeschlossen wird, verwehrt, die Zugriffsberechtigung für die Basisstation BS1 während der Anmeldephase zu bekommen. Sobald die Registrierungsphase für die Mobilstation MS1 und die Basisstation BSm abgelaufen ist, bekommen die Mobilstationen MS2...MSn wieder die Möglichkeit in der Anmeldungsphase die Zugriffsberechtigung für die Basisstation BS1 zu erlangen.

Der soeben geschilderte Fall, daß Mobilstationen während einer laufenden Registrierungsphase keine Zugriffsberechtigung für eine Basisstation erlangen können, tritt insbesondere dann auf, wenn mehrere Mobilstationen in dem Zeitraum zwischen dem Senden mindestens einer Meldung (Zustand "MESS") und dem erstmaligen Empfangen einer Rückmeldung durch die Basisstation die Zugriffsberechtigung haben wollen. Im vorliegenden Ausführungsbeispiel wird dieses Problem nach dem Prinzip "Wer zuerst rückmeldet, der darf zuerst" gelöst.

Alternativ besteht aber auch die Möglichkeit, daß sämtliche während des angegebenen Zeitraums angemeldeten Mobilstationen (a) parallel von der Basisstation oder (b) unter Beibehaltung des Prinzips in einer Warteschleife ausharrend sukzessiv bearbeitet werden.

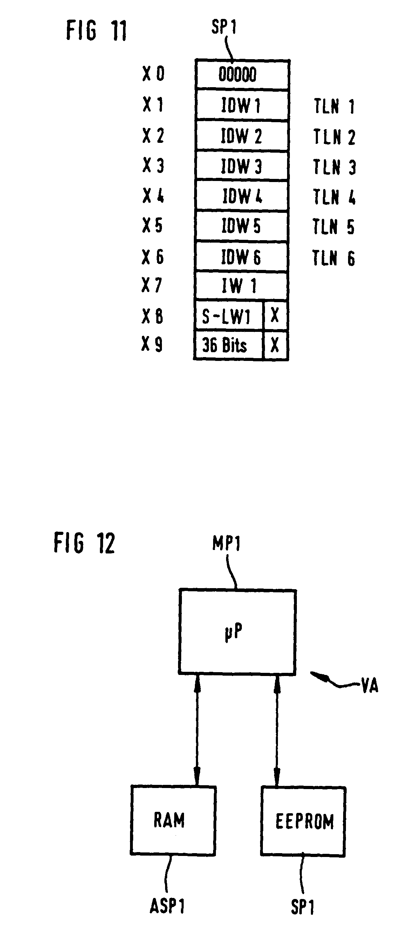

Mit der "Klammerung" der Mobilstation MS1 durch die Basisstation BS1 geht die Basisstation BS1 automatisch wieder in einen zweiten EMPFANGS-Zustand ("RECE-2") über, in dem sie auf eine Legitimationsmeldung LM von der Mobilstation MS1 wartet. Die Mobilstation MS1 sendet diese Legitimationsmeldung LM unmittelbar nachdem sie von der Basisstation BS1 "geklammert" worden ist in einem LEGITIMATIONS-Zustand ("LEGI") an die Basisstation BS1. Die Legitimationsmeldung LM besteht aus einem codierten Ist-Legitimationswort I-LW, das von dem Benutzer der Mobilstation MS1 durch Drücken von Tasten auf der Bedienoberfläche der Mobilstation MS1 erzeugt wird. Die Basisstation BS1, die auf diese Legitimationsmeldung LM bereits gewartet hat, überprüft in einem BERECHTIGT-Zustand ("AUTH"), ob das von ihr empfangene Ist-Legitimationswort I-LW, mit dem die Mobilstation MS1 vorgibt, für die Registrierung in der Basisstation BS1 berechtigt zu sein, mit einem Soll-Legitimationswort S-LW identisch ist, das in einen der Basisstation BS1 zugeordneten programmierbaren BS1-Speicher (z.B. PROM, EPROM oder EEPROM etc.) gespeichert ist. Dieser Soll-/Ist-Vergleich kann in der Basisstation BS1 mit einem Programm oder einer in der Basisstation BS1 realisierten Vergleichsanordnung durchgeführt werden, bei dem die Vergleichsanordnung VA gemäß Figur 12 in der einfachsten Form aus einem BS1-Mikroprozessor als Vergleicher, einem dem BS1-Mikroprozessor zugeordneten BS1-Arbeitsspeicher (z. B. RAM) zur Speicherung des Ist-Legitimationswortes I-LW und dem dem BS1-Mikroprozessor ebenfalls zugeordneten programmierbaren BS1-Speicher mit dem darin gespeicherten Soll-Legitimationswert S-LW besteht.

Stellt die Basisstation BS1 in dem BERECHTIGT-Zustand ("AUTH") fest, daß das Ist-Legitimationswort I-LW mit dem Soll-Legitimationswort S-LW nicht übereinstimmt (I-LW ≠ S-LW) und damit die Mobilstation MS1 für die Registrierung nicht berechtigt bzw. der Benutzer der Mobilstation MS1 nicht authorisiert ist, so weist sie die Mobilstation MS1, die sich mittlerweile in einem RICHTIG-Zustand ("CORR") befindet, als unberechtigt zurück. Die Basisstation BS1 schaltet sich daraufhin für die Registrierung aus, indem sie in den AUSGANGS-Zustand ("RESET BS1...BSm") zurückkehrt.

In Übereinstimmung dazu kann der Benutzer der Mobilstation MS1, nachdem diese für die Registrierung von der Basisstation BS1 zurückgewiesen worden ist, die Mobilstation MS1 vorübergehend ausschalten ("RESET MS1...MSn"), um dann z. B. zeitversetzt zu versuchen, sich mit einer anderen Basisstation zusammenzuschließen.

Ist die Mobilstation MS1 jedoch für die Registrierung berechtigt (I-LW = S-LW), dann gehen die Basisstation BS1 und die Mobilstation MS1 jeweils in einen ZUSAMMENSCHLUSS-Zustand ("JOIN") über. In diesen Zustand werden die jeweils temporär zwischengespeicherten Identifikationswörter IW1, IDW1 als Abschluß der Zusammenschlußprozedur "fest" gespeichert (das BS1-Identifikationswort IW1 wird in der Mobilstation MS1 nach Figuren 9 und 10 vom Arbeitsspeicher ASP2.1 auf den MS1-Speicherplatz Y1 des MS1-Speichers SP2.1 und das MS1-Identifikationswort IDW1 wird in der Basisstation BS1 nach Figuren 6 und 7 vom BS1-Speicherplatz XO auf den BS1-Speicherplatz X1 gespeichert).

Mit dieser gegenseitigen Speicherung der Identifikationswörter sind die Basisstation BS1 und Mobilstation MS1 zu der kommunikationsfähigen Einheit zusammengeschlossen. Nach diesem Zusammenschluß werden die Basisstation BS1 und Mobilstation MS1 jeweils für eventuelle neue Zusammenschlüsse in den AUSGANGS-Zustand ("RESET BS1..BSm") bzw. ("RESET MS1...MSn") zurückgesetzt. In diesem AUSGANGS-Zustand können die Basisstation BS1 und die Mobilstation MS1 jeweils in dem ÜBERGANGS-Zustand eine erneute Zusammenschlußprozedur, bei der die Basisstation BS1 z. B. mit den Mobilstationen MS2...MSn und die Mobilstation MS1 mit den Basisstationen BS2...BSm zusammengeschlossen werden soll, starten oder in den KOMMUNIKATIONS-zustand zum Aufbau einer Kommunikationsverbindung wechseln.

Die Figuren 5 bis 10 zeigen verschiedene Speicherzustände des BS1-Speichers SP1 der Basisstation BS1 und die MS1...MS6-Speicher SP2.1...SP2.6 der Mobilstationen MS1...MS6 während der Zusammenschlußprozedur der Basisstation BS1 mit den sechs Mobilstationen MS1...MS6.

Der BS1-Speicher SP1 weist z. B. zehn BS1-Speicherplätze X0...X9 auf, die wie folgt genutzt werden:

Der BS1-Speicherplatz X0 ist z. B. als Zwischenspeicherplatz für die MS1...MS6-Identifikationswörter IDW1...IDW6 der Mobilstationen MS1...MS6 reserviert.

Die BS1-Speicherplätze X1...X6 sind z. B. als Festspeicherplätze für die MS1...MS6-Identifikationswörter IDW1...IDW6 der Mobilstationen MS1...MS6 reserviert (Teilnehmer TLN1...TLN6).

Der BS1-Speicherplatz X7 ist z. B. als Festspeicherplatz für das BS1-Identifikationswort IW1 reserviert.

Der BS1-Speicherplatz X8 ist z. B. als Festspeicherplatz für das Soll-Legitimationswort S-LW1 reserviert.

Der BS1-Speicherplatz X9 ist z. B. als Festspeicherplatz für die 36 Bit der Ergänzungsmeldung reserviert.

Die MS1...MS6-Speicher SP2.1...SP2.6 weisen z. B. jeweils zwei MS1...MS6-Speicherplätze Y0, Y1 auf, die wie folgt genutzt werden:

Die MS1...MS6-Speicherplätze Y0 sind z. B. als Festspeicherplätze jeweils für die MS1...MS6-Identifikationswörter IDW1...IDW6 der Mobilstationen MS1...MS6 reserviert.

Die MS1...MS6-Speicherplätze Y1 sind z.B. als Festspeicherplätze jeweils für das BS1-Identifikationswort IW1 reserviert.

Darüber hinaus weisen die Mobilstationen MS1...MS6 MS1...MS6-Arbeitsspeicher ASP2.1...ASP2.6 auf, die als Zwischenspeicherplätze für das BS1-Identifikationswort IW1 zur Verfügung stehen.

Im einzelnen zeigt:

Figur 5 den BS1-Speicherzustand des BS1-Speichers SP1 nachdem die Basisstation BS1 die Fertigung verlassen hat.

Figur 8 die MS1...MS6-Speicherzustände der MS1...MS6-Speicher SP2.1...SP2.6 nachdem die Mobilstationen MS1...MS6 die Fertigung verlassen haben.

Figur 6 den BS1-Speicherzustand des BS1-Speichers SP1, wenn die Basisstation BS1 sich im ersten EMPFANGS-Zustand ("RECE-1") befindet.

Figur 9 die MS1...MS6-Speicherzustände der MS1...MS6-Speicher SP2.1...SP2.6 nachdem sich die Mobilstationen MS1...MS6 in dem ENDE DER SYNCHRONISATION-Zustand ("RDY SYNC; M1 ∧ M2") synchronisiert hat.

Figur 7 den BS1-Speicherzustand des BS1-Speichers SP1 nachdem die Basisstation BS1 mit der Mobilstation MS1 zusammengeschlossen ist.

Figur 10 die MS1...MS6-Speicherzustände der MS1...MS6-Speicher SP2.1...SP2.6 nachdem die Basisstation BS1 mit der Mobilstation MS1 zusammengeschlossen ist.

Figur 11 den BS1-Speicherzustand des BS1-Speichers SP1 nachdem die Basisstation BS1 mit den Mobilstationen MS1...MS6 zusammengeschlossen ist.

## Patentansprüche

1. Verfahren zum Zusammenschluß von Sende/Empfangseinrichtungen eines Schnurlos-Kommunikationssystems zu einer kommunikationsfähigen Einheit, bei dem
(a) in einer Anmeldungsphase
(a1) mindestens eine erste Sende-/Empfangseinrichtung (BS1... BSm) und mindestens eine zweite Sende-/Empfangseinrichtung (MS1...MSn) in einen zusammenschlußspezifischen Sende-/Empfangszustand gebracht werden,
(a2) von der ersten Sende-/Empfangseinrichtung (BS1...BSm) eine erste Meldung (M1) gesendet wird, die die zweite Sende-/Empfanpseinrichtung (MS1...MSn) empfängt und in Form einer Rückmeldung (RM) bestätigt,
(b) in einer Registrierungsphase aufgrund der anmeldungsphasespezifischen Meldungen (M1, RM) in den Sende-/Empfangseinrichtungen (BS1...BSm, MS1...MSn) gespeicherte, einrichtungsindividuelle Kennwörter (IW1...IWm, IWD1 ...IWDn) gegenseitig ausgetauscht und gespeichert werden,
**dadurch gekennzeichnet**, daß
(c) zusätzlich zu den von den Sende-/Empfangseinrichtungen (BS1...BSm, MS1...MSn) gegenseitig übertragenen Meldungen (M1, RM) mindestens eine weitere Meldung (LM, M2... Mi) übertragen wird, von denen zumindest eine durch Steuerungsprozeduren auf einer Bedienoberfläche der Sende-/Empfangseinrichtung (BS1...BSm, MS1...MSn) erzeugt wird
(d) die von der sendenden Sende-/Empfangseinrichtung (BS1 ...BSm, MS1...MSn) gesendete weitere Meldung (LM, M2... Mi) durch die empfangende Sende-/Empfangseinrichtung (BS1...BSm, MS1...MSn) aufgrund einer festgestellten Übereinstimmung mit jeweils einer in der empfangenden Sende-/Empfangseinrichtung (BS1...BSm, MS1...MSn) gespeicherten, mit der weiteren Meldung (LM, M2...Mi) korrespondierenden Vergleichsinformation bestätigt wird, bevor die einrichtungsindividuellen Kennwörter (IW1... IWm, IWD1...IWDn) gespeichert werden.

2. Verfahren nach Anspruch 1,
**dadurch gekennzeichnet,**
daß als weitere Meldungen (LM, M2...Mi) eine Ergänzungsmeldung (M2) von der ersten Sende-/Empfangseinrichtung (BS1... BSm) zur zweiten Sende-/Empfangseinrichtung (MS1...MSn) und eine durch die Steuerungsprozeduren an der zweiten Sende/Empfangseinrichtung (MS1...MSn) erzeugte Legitimationsmeldung (LM) von der zweiten Sende-/Empfangseinrichtung (MS1...MSn) zur ersten Sende-/Empfangseinrichtung (BS1...BSm) übertragen werden, wobei bei übereinstimmung
(1) der Ergänzungsmeldung (M2) mit der in der zweiten Sende-/Empfangseinrichtung (MS1...MSn) gespeicherten Vergleichsinformation die zweite Sende-/Empfangseinrichtung (MS1...MSn) mit der ersten Sende-/Empfangseinrichtung (BS1...BSm) synchronisiert ist,
(2) der Legitimationsmeldung (LM) mit der in der ersten Sende-/Empfangseinrichtung (BS1...BSm) gespeicherten Vergleichsinformation die Synchronisation der ersten Sende-/Empfangseinrichtung (BS1...BSm) mit der zweiten Sende-/Empfangseinrichtung (MS1...MSn) legitimiert ist.

3. Verfahren nach Anspruch 2,
**dadurch gekennzeichnet**,
daß die erste Sende-/Empfangseinrichtung (BS1...BSm) als Basisstation (BS1...BSm) und die zweite Sende-/Empfangseinrichtung (MS1...MSn) als Mobilstation (MS1...MSn) eines DECT-Schnurlostelefons ausgebildet ist.

4. Verfahren nach Anspruch 2,
**dadurch gekennzeichnet,**
daß in der Legitimationsmeldung (LM) als Meldungsinhalt ein Ist-Legitimationswort (I-LW) übertragen wird und in der korrespondierenden gespeicherten Vergleichsinformation ein Soll-Legitimationswort (S-LW) enthalten ist.

5. Verfahren nach Anspruch 2,
**dadurch gekennzeichnet**,
daß in der Ergänzungsmeldung (M2) als Meldungsinhalt ein Ergänzungswort (EW) übertragen wird.

6. Verfahren nach Anspruch 5,
**dadurch gekennzeichnet**,
daß dem Ergänzungswort (EW) ein 36 Bit großes, im DECT-Standard in einer MAC-Schicht frei verfügbares Systeminformationsfeld zugeordnet wird.

7. Verfahren nach Anspruch 5 oder Anspruch 6,
**dadurch gekennzeichnet**,
daß dem Ergänzungswort (EW) Kennungen des Schnurlos-Kommunikationssystems zugeordnet werden.

8. Verfahren nach einem der Ansprüche 1 bis 7,
**dadurch gekennzeichnet**,
daß jeweils mehrere erste und zweite Sende-/Empfangseinrichtungen (BS1...BSm, MS1...MSn) parallel zusammengeschlossen werden.

9. Verfahren nach einem der Ansprüche 1 bis 8,
**dadurch gekennzeichnet**,
daß mehrere erste und zweite Sende-/Empfangseinrichtungen (BS1...BSm, MS1...MSn) aus einer Warteschleife sukzessiv zusammengeschlossen werden.

## Claims

1. Process for combining transmitting/receiving devices of a cordless communication system to form a communicating unit, in which
(a) at a request stage
(a1) at least one first transmitting/receiving device (BS1...BSm) and at least one second transmitting/receiving device (MS1...MSn) are brought into a combining-specific transmitting/receiving state,
(a2) a first message (M1) is transmitted by the first transmitting/receiving device (BS1...BSm) which is received by the second transmitting/receiving device (MS1...MSn) and acknowledged in the form of a return message (RM),
(b) device-individual identification words (IW1...IWm, IWD1...IWDn), stored in the transmitting/receiving devices (BS1...BSm, MS1...MSn), are mutually exchanged and stored due to the request-stage-specific messages (M1, RM) at a registration stage,
characterized in that,
(c) in addition to the messages (M1, RM) mutually transmitted by the transmitting/receiving devices (BS1...BSm, MS1...MSn), at least one further message (LM, M2...Mi) is transmitted, at least one of which is generated by control procedures at a user interface of the transmitting/receiving device (BS1...BSm, MS1...MSn),
(d) the further message (LM, M2...Mi) transmitted by the transmitting/receiving device (BS1...BSm, MS1...MSn) is acknowledged by the receiving transmitting/receiving device (BS1...BSm, MS1...MSn) due to a correspondence found with in each case a reference information corresponding to the further message (LM, M2...Mi) and stored in the receiving transmitting/receiving device (BS1...BSm, MS1...MSn), before the device-specific code words (IW1...IWm, IWD1...IWDn) are stored.

2. Process according to Claim 1, characterized in that, as further messages (LM, M2...Mi), a supplementary message (M2) is transmitted from the first transmitting/receiving device (BS1...BSm) to the second transmitting/receiving device (MS1...MSn) and a legitimation message (LM) generated by the control procedures at the second transmitting/receiving device (MS1...MSn) is transmitted from the second transmitting/receiving device (MS1...MSn) to the first transmitting/receiving device (BS1...BSm), in which process, in the case of a correspondence
(1) of the supplementary message (M2) with the reference information stored in the second transmitting/receiving device (MS1...MSn), the second transmitting/receiving device (MS1...MSn) is synchronized with the first transmitting/receiving device (BS1...BSm),
(2) of the legitimation message (LM) with the reference information stored in the first transmitting/receiving device (BS1...BSm), the synchronization of the first transmitting/receiving device (BS1...BSm) with the second transmitting/receiving device (MS1...MSn) is legitimized.

3. Process according to Claim 2, characterized in that the first transmitting/receiving device (BS1...BSm) is constructed as base station (BS1...BSm) and the second transmitting/receiving device (MS1...MSn) is constructed as mobile station (MS1...MSn), of a DECT cordless telephone.

4. Process according to Claim 2, characterized in that an actual legitimation word (I-LW) is transmitted as message content in the legitimation message (LM) and a nominal legitimation word (S-LW) is contained in the corresponding stored reference information.

5. Process according to Claim 2, characterized in that a supplementary word (EW) is transmitted as message content in the supplementary message (M2).

6. Process according to Claim 5, characterized in that a 36-bit-long system information field, freely available in a MAC layer in the DECT standard, is allocated to the supplementary word (EW).

7. Process according to Claim 5 or Claim 6, characterized in that codes of the cordless communication system are allocated to the supplementary word (EW).

8. Process according to one of Claims 1 to 7, characterized in that in each case a number of first and second transmitting/receiving devices (BS1...BSm, MS1...MSn) are combined in parallel.

9. Process according to one of Claims 1 to 8, characterized in that a number of first and second transmitting/receiving devices (BS1...BSm, MS1...MSn) are progressively combined from a waiting loop.

## Revendications

1. Procédé pour réunir des dispositifs d'émission/de réception d'un système de communication sans fil pour former une unité apte à exécuter une communication, selon lequel
(a) pendant une phase de demande
(a1) au moins un premier dispositif d'émission/de réception (BS1...BSm) et au moins un second dispositif d'émission/de réception (MS1...MSn) sont placés dans un état d'émission/de réception spécifique pour la réunion,
(a2) le premier dispositif d'émission/de réception (BS1... BSm) envoie un premier message (M1), que le second dispositif d'émission/de réception (MS1...MSn) reçoit et confirme sous la forme d'une signalisation en retour (RM),
(b) dans une phase d'enregistrement, les mots caractéristiques (IW1...IWm, IWD1...IWDn), qui sont prévus pour chaque dispositif et sont mémorisés dans les dispositifs d'émission/de réception (BS1...BSm, MS1 ...MSn), sont échangés réciproquement et mémorisés, sur la base des messages (M1,RM) spécifiques à la phase de demande,
caractérisé en ce que
(c) en plus des messages (M1,RM) transmis réciproquement par les dispositifs d'émission/de réception (BS1...BSm, MS1...MSn) est transmis au moins un autre message (LM,M2...Mi), au moins l'un de ces messages étant produits au moyen de procédures de commande dans une zone de desserte du dispositif d'émission/de réception (BS1...BSm, MS1...MSn),
(d) l'autre message (LM,M2...Mi) émis par le dispositif d'émission/de réception (BS1...BSm, MS1...MSn), qui effectue l'émission, étant confirmé par le dispositif d'émission/de réception (BS1...BSm, MS1...MSn), qui réalise la réception, sur la base d'une concordance détectée avec respectivement une information de comparaison qui est mémorisée dans le poste d'émission/de réception (BS1...BSm, MS1...MSn), qui effectue la réception, et correspond à l'autre message (LM,M2...Mi), avant que les mots caractéristiques (IW1...IWm, IWD1...IWDn) prévus pour chaque dispositif soient mémorisés.

2. Procédé selon la revendication 1, caractérisé en ce que, comme autres messages (LM,M2...Mi), un message complémentaire (M2) est transmis par le premier dispositif d'émission/de réception (BS1...BSm) au second dispositif d'émission/de réception (MS1...MSn) et un message de légitimation (LM) produit par les procédures de commande dans le second dispositif d'émission/de réception (MS1...MSn), est transmis par le second dispositif d'émission/de réception (MS1...MSn) au premier dispositif d'émission/de réception (BS1...BSm), auquel cas
(1) en cas de concordance entre le message supplémentaire (M2) et l'information de comparaison mémorisée dans le second dispositif d'émission/de réception (MS1...MSn), le second dispositif d'émission/de réception (MS1...MSn) est synchronisé avec le premier dispositif d'émission/de réception (BS1...BSm),
(2) en cas de concordance entre le message de légitimation (LM) et l'information de comparaison mémorisée dans le premier dispositif d'émission/de réception (BS1...BSm), la synchronisation du premier dispositif d'émission/de réception (BS1...BSm) sur le second dispositif d'émission/de réception (MS1...MSn) est légitimée.

3. Procédé selon la revendication 2, caractérisé en ce que le premier dispositif d'émission/de réception (BS1...BSm) est agencé en tant que poste de base (BS1...BSm) et le second dispositif d'émission/de réception (MS1...MSn) est agencé en tant que poste mobile (MS1...MSn) d'un téléphone sans fil DECT.

4. Procédé selon la revendication 2, caractérisé en ce que dans le message de légitimation (LM), un mot réel de légitimation (I-LW) est transmis en tant que contenu de message et un mot de consigne de légitimation (S-LW) est contenu dans l'information mémorisée correspondante de comparaison.

5. Procédé selon la revendication 2, caractérisé en ce qu'un mot supplémentaire (EW) est transmis en tant que contenu de message dans le message supplémentaire (M2).

6. Procédé selon la revendication 5, caractérisé en ce qu'une zone d'information du système, qui possède une taille de 36 bits et est librement disponible selon le standard DETC dans une couche MAC, est associée au mot supplémentaire (EW).

7. Procédé selon la revendication 5 ou 6, caractérisé en ce que des indicatifs du système de communication sans fil sont associés au mot supplémentaire (EW).

8. Procédé selon l'une des revendications 1 à 7, caractérisé en ce que respectivement plusieurs premiers et seconds dispositifs d'émission/de réception (BS1...BSm, MS1...MSn) sont réunis en parallèle.

9. Procédé selon l'une des revendications 1 à 8, caractérisé en ce que plusieurs premiers et seconds dispositifs d'émission/de réception (BS1...BSm, MS1...MSn) sont réunis successivement à partir d'une boucle d'attente.
